# EUROPÄISCHE PATENTSCHRIFT

(11) **EP 3 568 737 B1**
(45) Veröffentlichungstag und Bekanntmachung des Hinweises auf die Patenterteilung: **13.01.2021**
(21) Anmeldenummer: 17825193.0
(22) Anmeldetag: 18.12.2017
(51) Int. Cl.: G02B 27/01, G06F 3/01, G06T 19/00

(54) **VERFAHREN ZUM BETREIBEN EINES ANZEIGESYSTEMS MIT EINER DATENBRILLE IN EINEM KRAFTFAHRZEUG**
METHOD FOR OPERATING A DISPLAY SYSTEM WITH AUGMENTED REALITY GLASSES IN A MOTOR VEHICLE
PROCÉDÉ DE FONCTIONNEMENT D'UN SYSTÈME D'AFFICHAGE COMPORTANT UN VISIOCASQUE DANS UN VÉHICULE AUTOMOBILE

(30) Priorität: 11.01.2017 DE 102017200325
(43) Veröffentlichungstag der Anmeldung: 20.11.2019
(73) Patentinhaber: Bayerische Motoren Werke Aktiengesellschaft, 80809 München (DE)
(72) Erfinder: GRAEF, Michael, 82166 Graefelfing (DE); KAUFMANN, Matthias, 85716 Unterschleissheim (DE)
(86) Internationale Anmeldenummer: PCT/EP2017/083325
(87) Internationale Veröffentlichungsnummer: WO 2018/130383

(56) Entgegenhaltungen:
- US-A1- 2015 002 542
- US-A1- 2016 282 619
- US-A1- 2016 364 904

## Beschreibung

### Technisches Gebiet

Die Erfindung betrifft Anzeigesysteme für Datenbrillen, insbesondere zum Einsatz in einem Kraftfahrzeug. Die Erfindung betrifft zudem Maßnahmen für eine ruckelfreie Darstellung kontaktanaloger anzuzeigender Objekte in der Datenbrille.

### Technischer Hintergrund

Es sind Datenbrillen, auch Head-mounted Displays genannt, bekannt, die mithilfe einer Anzeigevorrichtung eine Abbildung auf einer oder zwei Anzeigeflächen im Blickfeld des Trägers der Datenbrille anzeigen können. Die Sichtöffnungen der Datenbrille sind transparent, so dass durch die Datenbrille die reale Umgebung in gewöhnlicher Weise wahrgenommen werden kann. Die Anzeigeflächen liegen in den Sichtöffnungen und können halbtransparent ausgebildet sein, so dass eine anzuzeigende Information, wie beispielsweise Text, Symbole, Graphiken, Videoanzeigen und dergleichen, die Wahrnehmung der Umgebung überlagernd angezeigt werden kann. Darüber hinaus sind auch Datenbrillen bekannt, die eine nicht-transparente Anzeige umfassen.

Die durch die Informationen beschriebenen Objekte werden dem Träger der Datenbrille in der Regel kontaktanalog dargestellt, d.h. so dargestellt, dass die Information einem bestimmten Objekt in der Realumgebung überlagert ist bzw. an diesem orientiert ist oder dass die anzuzeigende Information in einer bestimmten Blickrichtung der Datenbrille bzw. deren Trägers angezeigt wird. Weiterhin ist es wünschenswert, die Information so darzustellen, dass sie in Bezug auf das Objekt in der Realumgebung perspektivisch korrekt erscheint, d.h. die Illusion entsteht, dass das Objekt der Realumgebung tatsächlich um das zusätzliche Merkmal der visuellen Information ergänzt wurde.

Um die Information entsprechend kontaktanalog auf den Anzeigeflächen der Datenbrille anzuzeigen, ist es notwendig, die Position des Objektes in der Umgebung und die Pose der Datenbrille, d.h. die 3D-Position als auch die 3D-Ausrichtung der Datenbrille, in Bezug zum Objekt zu kennen. Zur Bestimmung der Pose der Datenbrille kann in der Datenbrille eine Posenerkennungsfunktion implementiert sein. Die Posenerkennungsfunktion nutzt in der Regel eine Datenbrillenkamera und eine Steuereinheit, z.B. in Form eines Mikroprozessors. Mithilfe der Datenbrillenkamera aufgezeichnete Abbildungen der Umgebung des Trägers der Datenbrille kann basierend auf hinterlegten Abbildungen bzw. Strukturen des Fahrzeuginnenraums mithilfe von Mustererkennungsverfahren die Pose der Datenbrille im Fahrzeuginnenraum festgestellt werden. Diesen Vorgang nennt man auch Tracking.

Eine gängige Konfiguration eines solchen Anzeigesystems sieht vor, dass die in der Datenbrille anzuzeigenden grafischen Objekte durch Übertragungsdaten definiert werden. Die Übertragungsdaten werden von einem fahrzeugfesten Fahrerassistenzsystem über eine Kommunikationsverbindung an die Datenbrille übermittelt. Die Datenbrille erfasst wie oben beschrieben deren Pose, beispielsweise mithilfe der Datenbrillenkamera, und passt die Anzeige der anzuzeigenden Objekte entsprechend der Pose der Datenbrille an (Rendering). Aufgrund der begrenzten Bandbreite der Kommunikationsverbindung zwischen dem Fahrerassistenzsystem und der Datenbrille erfolgt eine Aktualisierung der anzuzeigenden Objekte in der Regel mit einer durch die Übertragungsrate angegebenen Häufigkeit. Diese ist geringer als eine durch eine Aktualisierungsrate der Posenerfassungsfunktion angegebene Häufigkeit.

Ansätze, die den Unterschied der Übertragungsrate und der Aktualisierungsrate berücksichtigen, führen zu einigen Nachteilen. Wird die Anzeigerate, mit der die anzuzeigenden Objekte in der Datenbrille angezeigt werden, auf die niedrigere Übertragungsrate der Kommunikationsverbindung angepasst, erhöht sich die Latenz, und insbesondere bei schnellen Kopfbewegungen springt die Darstellung der anzuzeigenden Objekte merklich. Auch eine Anzeige der anzuzeigenden Objekte mit der Anzeigerate der Kommunikationsverbindung führt zu einem ruckeligen Anzeigebild.

Werden die anzuzeigenden Objekte jeweils bis zum Empfang der nächsten Übertragungsdaten bezüglich der gleichen Pose dargestellt, so stimmt die Wahrnehmung der anzuzeigenden Objekte hinsichtlich der Positionierung des Anzeigebilds in der Datenbrille nicht mehr. D.h. das Anzeigebild in der Datenbrille wird an eine veränderte Pose der Datenbrille bis zum Empfang des nächsten Objektbildes nicht angepasst, so dass kontaktanalog anzuzeigende Objekte nicht mehr einer Position in der Realumgebung zugeordnet dargestellt werden.

Es ist Aufgabe der vorliegenden Erfindung, ein Verfahren zum Betreiben eines Anzeigesystems mit einer Datenbrille zur Verfügung zu stellen, bei dem eine ruckelfreie Anzeige auch bei einer bezüglich der Posenerfassung verringerten Übertragungsrate der Übertragungsdaten erreicht werden kann.

### Offenbarung der Erfindung

Diese Aufgabe wird durch das Verfahren zum Betreiben eines Anzeigesystems mit einer Datenbrille gemäß Anspruch 1.

Weitere Ausgestaltungen sind in den abhängigen Ansprüchen angegeben.

Eine Idee des obigen Verfahrens besteht darin, in der Zeit zwischen dem Empfangen von zwei Übertragungsdatenpaketen über die Kommunikationsverbindung von dem Fahrerassistenzsystem die kontaktanalog anzuzeigenden Objekte, die in den Übertragungsdaten definiert werden, hinsichtlich der kontaktanalog anzuzeigenden Objekte entsprechend mindestens einer aktualisierten Pose der Datenbrille anzuzeigen. Dadurch erfolgt eine Aktualisierung des Anzeigebilds mit einer Anzeigerate, die höher ist als die Übertragungsrate der Übertragungsdaten. Auf diese Weise kann ein Ruckeln des Anzeigebilds vermieden werden. Dies vermeidet insbesondere das Reduzieren der Anzeigerate des Anzeigebilds auf die Ubertragungsrate, mit der die Übertragungsbilder empfangen werden.

Weiterhin können die Übertragungsdaten weiterhin mindestens ein nicht-kontaktanalog anzuzeigendes Objekt definieren, wobei das mindestens eine nicht-kontaktanalog anzuzeigende Objekt entsprechend der Anzeigerate generiert und angezeigt wird.

Insbesondere kann die Anzeigerate der Aktualisierungsrate für das Erfassen der Pose der Datenbrille entsprechen.

Es kann vorgesehen sein, dass der Ort und die Kontur des mindestens einen kontaktanalog anzuzeigenden Objekts in einem Fahrzeugkoordinatensystem definiert werden.

Die Druckschrift US 2016/0282619 A1 offenbart ein kopfgetragenes Bilderzeugungsgerät mit einer Erfassungseinheit zum Erfassen einer Pose der Datenbrille, eine Bilderzeugungseinheit zum Erzeugen eines Bildes abhängig von der Pose der Datenbrille und eine Korrektureinheit zum Korrigieren des Bildes mithilfe einer aktualisierten Poseninformation.

Aus der Druckschrift US 2016/0364904 A1 ist ein System mit einer Datenbrille bekannt, mit der ein Bild abhängig von einer Pose des Kopfes erzeugt wird. Das Bild wird abhängig von einer Differenz zwischen zwei aufeinanderfolgenden erfassten Kopfposen ermittelt.

Aus der Druckschrift US 2015/0002542 A1 ist ein Mobilgerät bekannt mit einer Datenbrille, bei der ein angezeigtes Bild abhängig von einer aktualisierten Pose dargestellt wird.

### Kurzbeschreibung der Zeichnungen

Ausführungsformen werden nachfolgend anhand der beigefügten Zeichnungen näher erläutert. Es zeigen:
- Figur 1: eine schematische Darstellung eines Anzeigesystems mit einer Datenbrille zum Einsatz in einem Kraftfahrzeug;

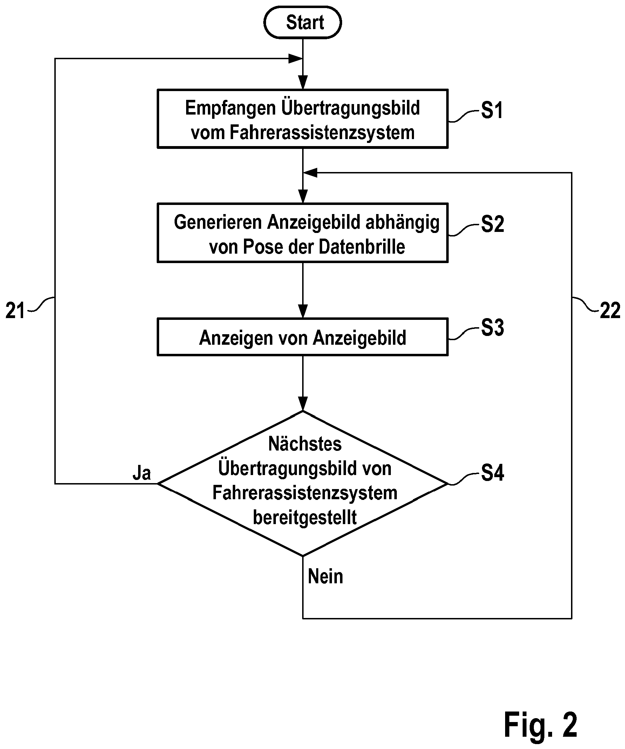

- Figur 2: ein Flussdiagramm zur Veranschaulichung eines Verfahrens zum Betreiben des Anzeigesystems; und
- Figur 3: einen Zeitstrahl zur Veranschaulichung des Ablaufs zur Darstellung von Anzeigebildern in der Datenbrille.

### Beschreibung von Ausführungsformen

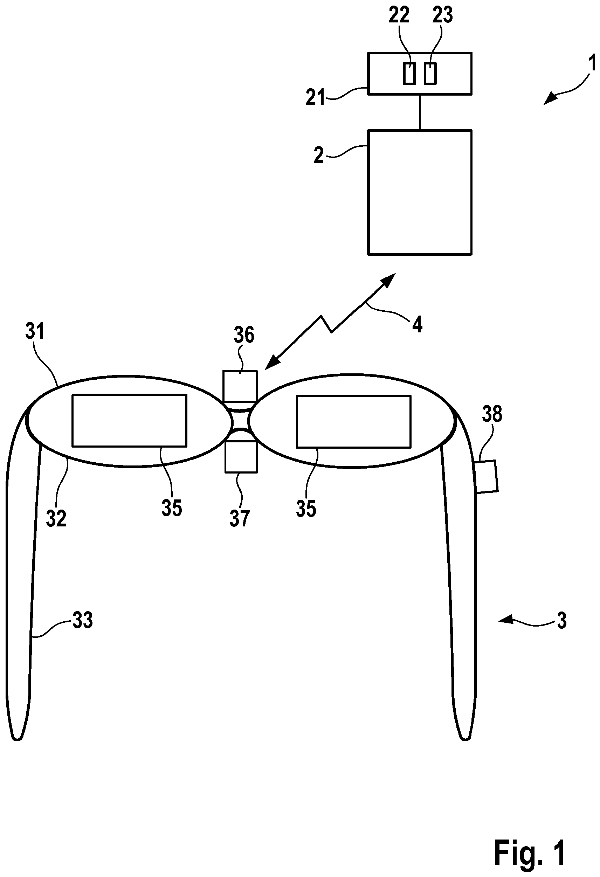

Figur 1 zeigt eine schematische Darstellung eines Anzeigesystems 1 insbesondere zum Einsatz in einem Kraftfahrzeug. Das Anzeigesystem 1 umfasst ein Fahrerassistenzsystem 2, das in Kommunikationsverbindung 4 mit einer Datenbrille 3 steht. Die Kommunikationsverbindung 4 ist als ein Datenübertragungskanal ausgebildet, z.B. in Form einer drahtlosen Kommunikationsverbindung oder einer drahtgebundenen Kommunikationsverbindung. Die Kommunikationsverbindung 4 ist in der Lage, jegliche Art von Daten und Informationen zwischen dem Fahrerassistenzsystem 2 und der Datenbrille 3 zu übermitteln, beispielsweise basierend auf einer paketgebundenen Datenübertragung.

Die Datenbrille 3 ist mit zwei transparenten Sichtscheiben 32, die in einem Rahmen 31 in an sich bekannter Weise eingefasst sind. Der Rahmen 31 ist mit Brillenbügeln 33 versehen, so dass die Datenbrille 3 am Kopf eines Benutzers in an sich bekannter Weise getragen werden kann.

Die Sichtscheiben 32 sind weiterhin jeweils mit einer transparenten Anzeigefläche 35 versehen, in die durch eine geeignete Einrichtung, wie zum Beispiel eine an dem Rahmen 31 angeordnete Anzeigeeinrichtung 36, ein Anzeigebild angezeigt werden kann. Die Anzeigeeinrichtung 36 kann einen Mikroprozessor oder eine vergleichbare Recheneinheit und eine Anzeigeeinheit, wie z.B. eine Projektionseinrichtung oder dergleichen, aufweisen. Die Anzeigeeinheit kann ausgebildet sein, ein elektronisch generiertes Anzeigebild auf die jeweilige Anzeigefläche 35 einzublenden.

Durch die transparente Ausbildung der Anzeigefläche 35 kann das elektronisch generiertes Bild die durch die Anzeigefläche 35 wahrnehmbare Realumgebung überlagern. Mithilfe der Anzeigeeinrichtung 36 kann eine Information, wie beispielsweise einen Text, ein Symbol, eine Videoinformation, eine Grafik oder dergleichen, auf einer oder beiden Anzeigeflächen 35 dargestellt werden.

Die Datenbrille 3 kann wie eine typische Sehhilfe an dem Kopf des Benutzers getragen werden, wobei die Datenbrille 3 mit dem Rahmen 31 auf der Nase des Benutzers aufliegt und die Bügel 33 an dem Kopf des Benutzers seitlich anliegen. Die Blickrichtung des Benutzers in Geradeausrichtung erfolgt dann durch die Sichtscheiben 32 im Wesentlichen durch die transparenten Anzeigeflächen 35, so dass die Blickrichtung des Benutzers der Ausrichtung der Datenbrille 3 entspricht oder davon abgeleitet werden kann.

Weiterhin kann die Datenbrille 3 mit einer Steuereinheit 37 versehen sein. Die Steuereinheit 37 kann in geeigneter Weise ausgebildet sein und Datenbrillenfunktionen und Funktionen des Anzeigesystems 2 ausführen. Dazu kann das Fahrerassistenzsystem 2 mit der Datenbrille 3 in Verbindung stehen, um Anzeigeinformationen betreffend kontaktanalog oder nicht-kontaktanalog anzuzeigenden virtuellen Objekten an die Datenbrille 3 zu übermitteln. Die Anzeigeinformationen definieren die Position und Darstellung der virtuellen Objekte in Bezug auf das Fahrzeug, d.h. in einem Fahrzeugkoordinatensystem (Bezugsystem des Kraftfahrzeugs).

Über die Kommunikationsverbindung 4 kann das Fahrerassistenzsystem 2 mit der Datenbrille 3 Daten austauschen. Die Übertragungsdaten werden beispielsweise von dem Fahrerassistenzsystem 2 an die Datenbrille 3 in regelmäßigen Zeitabständen gemäß einer Übertragungsrate übermittelt. Die Übertragungsdaten enthalten Anzeigebilddaten und Objektdaten, die kontaktanalog und nicht-kontaktanalog anzuzeigende Objekte definieren, die in der Datenbrille 3 dargestellt werden sollen.

Beispielsweise kann die Steuereinheit 37 eine Posenerkennungsfunktion in Form eines Tracking-Prozesses ausführen, um eine Pose des Kopfes bzw. der Datenbrille in einem Fahrzeuginnenraum festzustellen. Die Pose einer Datenbrille 3 bezeichnet hierin die räumliche Position der Datenbrille 3 in dem Fahrzeugkoordinatensystem sowie deren dreidimensionale Ausrichtung. Die Steuereinheit 37 kann dazu mit einer geeigneten Datenbrillenkamera 38 verbunden sein, die etwa in Blickrichtung des Trägers der Datenbrille 3 gerichtet ist. Die Datenbrillenkamera 38 erfasst regelmäßig Kamerabilder und übermittelt diese an die Steuereinheit 37. Die Steuereinheit 37 wertet die Kamerabilder aus und versucht mithilfe von Mustererkennungsverfahren markante Strukturen des Fahrzeuginnenraums in dem Kamerabild aufzufinden, deren Positionen bekannt sind, und daraus die Pose der Datenbrille 3 zu ermitteln.

In der Steuereinheit 37 können abhängig von der Pose der Datenbrille 3 die kontaktanalog anzuzeigenden virtuellen Objekte der Anzeigeinformationen vom Fahrzeugkoordinatensystem in ein Bezugsystem der Brille, insbesondere deren Anzeige, übersetzt werden.

Die Datenbrille 3 kann wie eine typische Sehhilfe an dem Kopf des Benutzers getragen werden, wobei die Datenbrille 3 mit dem Rahmen 31 auf der Nase des Benutzers aufliegt und die Bügel 33 an dem Kopf des Benutzers seitlich anliegen. Die Blickrichtung des Benutzers in Geradeausrichtung erfolgt dann durch die Sichtscheiben 32 im Wesentlichen durch die transparenten Anzeigeflächen 35, so dass die Blickrichtung des Benutzers der Ausrichtung der Datenbrille 3 entspricht oder davon abgeleitet werden kann.

Das Fahrerassistenzsystem 2 steht mit mindestens einer Umgebungserfassungseinrichtung 21 in Verbindung, durch die Objekte in einer Fahrzeugumgebung wahrgenommen bzw. identifiziert werden können. Beispielsweise kann eine solche Einrichtung eine oder mehrere Kameras 22, einen oder mehrere LiDAR-Sensoren, einen Radar 23, einen Ultraschallsensor und dergleichen umfassen. Basierend auf den Sensordaten, die durch die Umgebungserfassungseinrichtung 21 erfasst werden, können Objektdaten für kontaktanalog anzuzeigende Objekte generiert werden.

Über die Kommunikationsverbindung 4 werden von dem Fahrerassistenzsystem 2 regelmäßig Übertragungsdaten an die Datenbrille 3 übertragen, so dass die Datenbrille 3 eine kontaktanaloge Darstellung von dadurch definierten Objekten abhängig von deren Pose anzeigen kann. Zur Anzeige eines Anzeigebilds in der Datenbrille 3 wird in der Steuereinheit 37 das nachfolgend beschriebene Verfahren ausgeführt. Das Verfahren erfolgt in der Datenbrille und wird zyklisch ausgeführt.

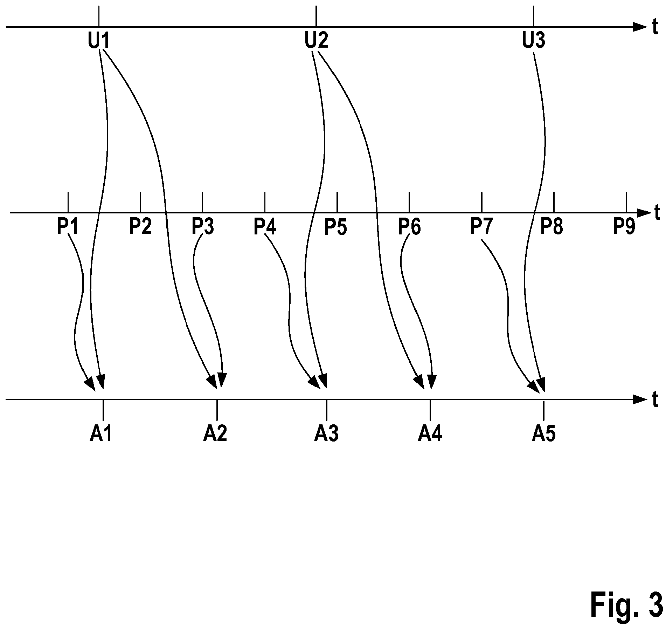

In Schritt S1 werden Übertragungsdaten von dem Fahrerassistenzsystem 2 in der Datenbrille 3 empfangen. Die Übertragungsdaten umfassen Objektdaten für kontaktanalog und nicht kontaktanalog anzuzeigende Objekte oder Abbildungen. Mit Bezug zu dem Zeitstrahl der Figur 3 wird das Übertragungsbild zu den Zeitpunkten U1, U2,... empfangen.

Die Posen der Datenbrille 3 werden durch eine in der Steuereinheit 37 implementierte Posenerfassungsfunktion regelmäßig neu bestimmt. Die Posenerfassung erfolgt gemäß einer Aktualisierungsrate zu den Zeitpunkten P1, P2, ..., die in dem Zeitstrahl der Figur 3 dargestellt sind. Die Posenerfassung erfolgt nicht synchronisiert zu dem Empfang der Übertragungsdaten vom Fahrerassistenzsystem 2.

In Schritt S2 wird eine zuletzt erfasste Pose der Datenbrille 3 verwendet, um ein Anzeigebild zu generieren. Beim Generieren des Anzeigebilds werden die nicht kontaktanalog anzuzeigenden Objekte auf das Anzeigebild platziert und die kontaktanalog anzuzeigenden Objekte abhängig von einer aktuellen, zuletzt erfassten Pose der Datenbrille 3 platziert. Dazu wird die feste Raumposition der kontaktanalog anzuzeigenden Objekte im Fahrzeugkoordinatensystem entsprechend der Position und Blickrichtung des Trägers der Datenbrille 3 in das Anzeigebild so platziert, dass dem Fahrer das virtuelle Objekt an der festen Raumposition angezeigt wird.

In Schritt S3 wird das generierte Anzeigebild auf der Anzeigefläche 35 angezeigt. Das Anzeigen des Anzeigebilds erfolgt für eine vorbestimmte Zeitdauer, die durch eine Anzeigerate (die sogenannte Frame-Rate) bestimmt ist. Die Zeitpunkte der Anzeige des Anzeigebilds sind durch A1, A2,... in Figur 3 gezeigt. Im Schritt S4 wird überprüft, ob neue Übertragungsdaten vom Fahrerassistenzsystem empfangen worden sind. Ist dies der Fall (Alternative: Ja), wird zu Schritt S1 zurückgesprungen, anderenfalls (Alternative: Nein) wird das Verfahren mit Schritt S2 fortgesetzt. Es ergeben sich dadurch zwei Ablaufschleifen L1 und L2, wobei die erste Ablaufschleife L1 eine Wiederholrate aufweist, die der Übertragungsrate für den Empfang der Übertragungsdaten entspricht. Die zweite Ablaufschleife L2 weist eine Wiederholrate auf, die höher ist als die Übertragungsrate der ersten Ablaufschleife L1 und an die technischen Gegebenheiten der Datenbrille 3 angepasst sein kann. Beispielsweise kann die Übertragungsrate der ersten Ablaufschleife L1 30 Hz, die Anzeigerater der Ablaufschleife L2 90 Hz betragen. Die Anzeigerate der Ablaufschleife L2 wird vorwiegend durch die Dauer der Anzeige des Anzeigebilds in der Datenbrille 3 bestimmt.

Erfindungsgefäß ist die Anzeigerate und damit die Dauer der Anzeige des Anzeigebilds in der Datenbrille 3 an die Aktualisierungsrate der Posen der Datenbrille 3 angepasst und zu dieser synchronisiert. Somit kann ein jeweils aktualisiertes Anzeigebild, auf dem kontaktanalog anzuzeigende Objekte entsprechend der aktuellsten Pose platziert ist, mit einer höheren Anzeigerate in der Datenbrille 3 angezeigt werden als die Rate, mit der Übertragungsdaten von dem Fahrerassistenzsystem 2 empfangen werden. Dies ermöglicht eine ruckelfreie Darstellung von Anzeigebildern und kontaktanalog darzustellender Objekte.

### Bezugszeichenliste

- 1: Anzeigesystem
- 2: Fahrerassistenzsystem
- 21: Umgebungserfassungseinrichtung
- 22: Kamera
- 23: Radar
- 3: Datenbrille
- 31: Rahmen
- 32: Sichtscheiben
- 33: Brillenbügel
- 35: transparente Anzeigefläche
- 36: Anzeigeeinrichtung
- 37: Steuereinheit
- 38: Datenbrillenkamera
- 4: Kommunikationsverbindung

## Patentansprüche

1. Verfahren zum Betreiben eines Anzeigesystems (1) mit einer Datenbrille (3) in einem Kraftfahrzeug, mit folgenden Schritten:
- Empfangen (S1) von Übertragungsdaten in der Datenbrille gemäß einer Übertragungsrate von einem Fahrerassistenzsystem, wobei die Übertragungsdaten mindestens ein kontaktanalog anzuzeigendes Objekt für eine bestimmte Kraftfahrzeugposition definieren; wobei ein kontaktanaloges Anzeigen umfasst, dass die Information einem bestimmten Objekt in der Realumgebung überlagert ist;
- Erfassen einer Pose der Datenbrille mit einer Aktualisierungsrate, die größer ist als die Übertragungsrate;
- Generieren und Anzeigen eines Anzeigebilds mit einer Anzeigerate, die größer ist als die Übertragungsrate, wobei das mindestens eine kontaktanalog anzuzeigende Objekt bei jeder Generierung des Anzeigebilds entsprechend der zuletzt erfassten Pose in dem Anzeigebild dargestellt wird,
wobei die Anzeigerate der Aktualisierungsrate für das Erfassen der Pose der Datenbrille entspricht.

2. Verfahren nach Anspruch 1, wobei die Übertragungsdaten weiterhin mindestens ein nicht-kontaktanalog anzuzeigendes Objekt definieren, wobei das mindestens eine nicht-kontaktanalog anzuzeigende Objekt entsprechend der Anzeigerate generiert und angezeigt wird.

3. Verfahren nach einem der Ansprüche 1 bis 2, wobei der Ort und die Kontur des mindestens einen kontaktanalog anzuzeigenden Objekts in einem Fahrzeugkoordinatensystem definiert werden.

## Claims

1. Method for operating a display system (1) with smart glasses (3) in a motor vehicle, comprising the following steps:
- receiving (S1) transmission data in the smart glasses according to a transmission rate from a driver assistance system, wherein the transmission data defines at least one object which is to be displayed in a contact-analogous fashion, for a specific motor vehicle position; wherein contact-analogous display comprises the fact that a specific object in the real surroundings is superimposed on the information;
- capturing a pose of the smart glasses with an update rate which is higher than the transmission rate;
- generating and displaying a display image with a display rate which is higher than the transmission rate, wherein whenever the display image is generated the at least one object which is to be displayed in a contact-analogous fashion is displayed in the display image in accordance with the pose last captured,
wherein the display rate corresponds to the update rate for the capturing of the pose of the smart glasses.

2. Method according to Claim 1, wherein the transmission data also defines at least one object which is to be displayed in a non-contact-analogous fashion, wherein the at least one object which is to be displayed in a non-contact-analogous fashion is generated and displayed in accordance with the display rate.

3. Method according to either of Claims 1 and 2, wherein the location and the contour of the at least one object which is to be displayed in a contact-analogous fashion is defined in a vehicle coordinate system.

## Revendications

1. Procédé de fonctionnement d'un système d'affichage (1) comportant un visiocasque (3) dans un véhicule automobile, comprenant les étapes consistant à :
- recevoir (S1) des données de transmission dans le visiocasque en fonction d'un débit de transmission en provenance d'un système d'aide à la conduite, dans lequel les données de transmission définissent au moins un objet à afficher analogue au contact pour une certaine position du véhicule automobile ; dans lequel un affichage analogue au contact comprend la superposition de l'information à un certain objet dans l'environnement réel ;
- détecter une pose du visiocasque avec une vitesse de rafraîchissement supérieure au débit de transmission ;
- générer et afficher une image d'affichage avec une vitesse d'affichage qui est supérieure au débit de transmission, dans lequel ledit au moins un objet à afficher analogue au contact est représenté lors de chaque génération de l'image d'affichage en fonction de la pose détectée en dernier dans l'image d'affichage,
dans lequel la vitesse d'affichage correspond à la vitesse de rafraîchissement pour la détection de la pose du visiocasque.

2. Procédé selon la revendication 1, dans lequel les données de transmission définissent en outre au moins un objet à afficher non analogue au contact, dans lequel ledit au moins un objet à afficher non analogue au contact est généré et affiché en fonction de la vitesse d'affichage.

3. Procédé selon l'une des revendications 1 à 2, dans lequel l'emplacement et le contour dudit au moins un objet à afficher analogue au contact sont définis dans un système de coordonnées du véhicule.
